# EUROPÄISCHE PATENTANMELDUNG

(11) **EP 2 985 146 A1**
(43) Veröffentlichungstag der Anmeldung: **17.02.2016**
(21) Anmeldenummer: 14181145.5
(22) Anmeldetag: 15.08.2014
(51) Int. Cl.: B32B 17/06, B32B 27/30, B29C 55/16, C08L 33/12

(54) **Schicht-Verbund**

(71) Anmelder: Evonik Röhm GmbH, 64293 Darmstadt (DE)
(72) Erfinder: Groothues, Herbert, 60528 Frankfurt (DE); Recktenwald, Roger, 64625 Bensheim (DE); Schwarz-Barac, Sabine, 64560 Riedstadt (DE); Albrecht, Klaus, 55129 Mainz (DE); Fassbender, Birgit, 55122 Mainz (DE)

(57) **Zusammenfassung**

Die vorliegende Erfindung betrifft einen Verbund, vorzugsweise einen Laminat-Verbund, enthaltend eine Schicht aus in der Schichtebene biaxial gereckten Kunststoffen, insbesondere aus Polymethylmethacrylat. Gleichzeitig betrifft die vorliegende Erfindung ein Verfahren zur Herstellung dieses Verbunds, vorzugsweise dieses Laminat-Verbundes, und die Verwendung dieses Verbundes, vorzugsweise dieses Laminat-Verbundes, in LCD-, E-Ink- oder OLED-Displays und die unter Verwendung dieses Verbundes, vorzugsweise dieses Laminat-Verbundes, hergestellten Displays selbst.

## Beschreibung

### Gebiet der Erfindung

Die vorliegende Erfindung betrifft einen Verbund, vorzugsweise einen Laminat-Verbund, enthaltend eine Schicht aus einem in der Schichtebene biaxial gereckten Kunststoff, der insbesondere überwiegend aus Polymethylmethacrylat besteht. Gleichzeitig betrifft die vorliegende Erfindung ein Verfahren zur Herstellung dieses Verbundes, vorzugsweise dieses Laminat-Verbundes, und die Verwendung dieses Verbundes, vorzugsweise dieses Laminat-Verbundes, in LCD-, OLED- oder elektrophoretischen Displays und die unter Verwendung dieses Verbundes, vorzugsweise dieses Laminat-Verbundes, hergestellten Displays selbst.

### Stand der Technik

Wenn man zwei oder mehr Materialien, die sich in ihrer thermischen Ausdehnung oder in ihrer Wasseraufnahme unterscheiden, in einer Schichtstruktur kombiniert, dann erzeugen Temperatur- und Luftfeuchteänderungen Spannungen in der Schichtstruktur, die zur Wölbung oder sogar zur Ablösung der Schichten führen können. Typische Beispiele für solche Schichtsysteme sind Flüssigkristall-Displays, die aus einer Vielzahl von unterschiedlichen Schichten bestehen, inklusive mindestens zweier Schichten aus Silikatglas. Wenn man ein Deckglas aus Kunststoff mit diesem Silikatglas verklebt, entstehen bei Änderung der Luftfeuchtigkeit und/oder Temperatur Spannungen, da das Silikatglas sowohl eine geringere thermische Ausdehnung als auch eine geringere Wasseraufnahme aufweist als Kunststoffe. Diese Spannungen können zur Wölbung und/oder Ablösung des Deckglases führen. Mit zunehmender Displaygröße wird der Effekt stärker, da die absoluten Unterschiede in der Dimensionsänderung durch Temperaturänderung oder Wasseraufnahme mit der Displaygröße zunehmen.

Im Stand der Technik ist bekannt, dass das Problem vermieden oder zumindest reduziert werden kann, indem ein Deckglas verwendet wird, das ebenfalls aus Silikatglas besteht (z.B. Gorilla ® Glass von der Firma Corning). Allerdings hat Silikatglas den Nachteil, dass sowohl das Produkt als auch der Verarbeitungsprozess mit hohen Kosten verbunden ist. Weiterhin führt ein solcher Aufbau zu einem deutlich höheren Gewicht des Gesamtgerätes.

Eine leichtere Alternative stellt die Verwendung von Kunststoffen dar, wobei dieser jedoch nur eine geringe Wasseraufnahme aufweisen darf. Beispiele hierfür sind Polyethylenterephthalat (PET), Polystyrol oder Polycarbonat. Diese haben jedoch sämtlich den Nachteil einer niedrigen Oberflächenhärte. Die geringe Oberflächenhärte dieser Kunststoffe führt zu einer geringeren Kratzfestigkeit, und zwar auch dann, wenn das Produkt zusätzlich mit einem Kratzfestlack ausgestattet ist. Zudem ist das Problem der hohen thermischen Ausdehnung relativ zu Silikatglas auch bei diesen Kunststoffen vorhanden. Darüber hinaus haben Polystyrol und PET nur unzureichende optische Eigenschaften und vermindern als Abdeckmaterial die Bildqualität eines Bildschirms. Polycarbonat und Polystyrol dagegen haben den zusätzlichen Nachteil, dass die Materialien zum Vergilben neigen. Dies tritt insbesondere auf, wenn die Oberfläche aus entsprechenden Materialien einer direkten Sonneneinstrahlung ausgesetzt wird.

Polymethylmethacrylat, das eine deutlich bessere Oberflächenhärte, Farbbeständigkeit und optische Brillanz aufweist als die oben genannten Kunststoffe, zeigt bekanntermaßen im Vergleich zu den o.g. Kunststoffen jedoch eine deutlich höhere Wasseraufnahme. Ein weiteres Problem bei Polymethylmethacrylat ist seine geringe Schlagzähigkeit.

Eine Lösung für die beschriebenen bekannten Probleme ist im Stand der Technik durch eine Kombination verschiedener Kunststoffe in einem Deckglas bekannt: so bietet Mitsubishi Gas Chemical unter den Produktbezeichnungen MR58 und MR58ST Schichtsysteme aus PMMA und Polycarbonat (PC) an. Diese Schichtsysteme sind in JP 2007-237700 beschrieben. Ca. 80% bis 90% der Gesamtdicke dieser Schichtsysteme besteht dabei aus PC und 10% bis 20% aus Polymethylmethacrylat. Auf der Polymethylmethacrylat-Seite wird ein Kratzfestlack aufgebracht. Diese Lösung neigt allerdings im Klimawechseltest ebenfalls zur Wölbung und auch die Kratzfestigkeit ist etwas geringer als bei einem reinen Polymethylmethacrylat-Deckglas mit gleichem Kratzfestlack.

In US 4,668,729 ist einfach gerecktes Polymethylmethacrylat für Auto- und Gebäudeverscheibungen beschrieben. Hier wird allerdings nur gereckt, um die mechanischen Eigenschaften zu verbessern. Dabei werden mehrere Scheiben parallel in einem Packen gereckt.

In EP 376696 wird eine biaxial gereckte Polymethylmethacrylat-Folie, die in Polarisatoren als Schutzfolie für eine Polyvinylacetat-Schicht eingesetzt werden kann, beschrieben. Hier wird die Reckung auch zur Verbesserung der mechanischen Eigenschaften durchgeführt. Da es sich hierbei um sehr dünne Folien unter 0,1 mm Dicke handelt, ist die thermische bzw. die feuchtigkeitsbedingte Ausdehnung für die Anwendung unkritisch.

### Aufgabe

In Anbetracht des Standes der Technik war es nun Aufgabe der vorliegenden Erfindung, einen neuartigen Verbund, vorzugsweise einen Laminat-Verbund, bevorzugt eine Kunststoffverglasung, für LCD-, elektrophoretische (E-Ink-) oder OLED-Displays zur Verfügung zu stellen. Dabei soll dieser Verbund, vorzugsweise dieser Laminat-Verbund, bevorzugt diese Kunststoffverglasung, sehr gute optische und mechanische Eigenschaften aufweisen und gleichzeitig eine nur sehr geringe Ausdehnung in der Ebene des Verbundes, vorzugsweise des Laminat-Verbundes, bevorzugt der Kunststoffverglasung, unter Temperaturerhöhung aufweisen.

Weiterhin war es Aufgabe, in den genannten Displays einen Verbund, vorzugsweise einen Laminat-Verbund, bevorzugt eine Kunststoffverglasung, zu verwenden, die eine sehr geringe Ausdehnung in der Ebene des Verbundes, vorzugsweise des Laminat-Verbundes, bevorzugt der Kunststoffverglasung, bei Feuchtigkeitsaufnahme zeigt. Darüber hinaus sollte der Verbund, vorzugsweise der Laminat-Verbund, bevorzugt die Kunststoffverglasung, auch bei längerem Gebrauch oder nach Bewitterung besonders niedrige Gelbwerte aufweisen.

Ein weiteres Ziel der vorliegenden Erfindung bestand darin, ein einfaches und kostengünstiges Verfahren zur Herstellung des besagten Verbundes, vorzugsweise des Laminat-Verbundes, bevorzugt der besagten Kunststoffverglasung, bereitzustellen. Ein zusätzliches Ziel der vorliegenden Erfindung bestand darin, Displays zur Verfügung zu stellen, die auf einfache Weise in Größe und Form den Anforderungen angepasst werden können.

Ebenso bestand eine Aufgabe der vorliegenden Erfindung darin, einen Verbund, vorzugsweise einen Laminat-Verbund, bevorzugt eine Kunststoffverglasung, bereit zu stellen, der/die nicht die Nachteile des Standes der Technik aufweist, insbesondere der/die nicht durch Temperatur- und Luftfeuchteänderungen Spannungen in der Schichtstruktur aufweist, die zu einer Wölbung oder sogar zu einer Ablösung der Schichten führen können.

Weitere, nicht explizit genannte Aufgaben ergeben sich aus dem Gesamtzusammenhang der nachfolgenden Beschreibung, Beispiele und Ansprüche.

### Lösung

Gelöst werden die Aufgaben durch einen erfindungsgemäßen Verbund, vorzugsweise einen Laminat-Verbund, umfassend:
- eine Kunststoffverglasungsschicht aus einem in der Schichtebene biaxial gereckten Kunststoff, wobei der Kunststoff zu mindestens 80 Gew.-%, vorzugsweise zu mindestens 90 Gew.-%, jeweils bezogen auf das Gesamtgewicht des Kunststoffes, Polymethylmethacrylat ist mit einem syndiotaktischen Triadenanteil von mindestens 60 %, vorzugsweise mit einem syndiotaktischen Triadenanteil von mindestens 62 %, jeweils bezogen auf den Gesamt-Triadenanteil des Polymethylmethacrylats, und wobei die Kunststoffverglasungsschicht eine Glasübergangstemperatur (TG) von mindestens 116°C, vorzugsweise mindestens 117°C, bevorzugt mindestens 119°C, aufweist,
- eine Klebeschicht, vorzugsweise ein optical clear adhesive (OCA) oder ein pressure sensitive adhesive (PSA), und
- eine Schicht aus anorganischem Glas;
dessen Herstellung, dessen Verwendung als Display oder Displayabdeckung oder Teil eines Displays oder einer Displayabdeckung und den entsprechenden Displays oder Displayabdeckungen selbst bzw. dem Teil eines Displays oder einer Displayabdeckung selbst.

Der erfindungsgemäße Verbund, vorzugsweise Laminat-Verbund, ist bevorzugt eine Kunststoffverglasung.

### Kurze Beschreibung der Abbildungen

### Abbildung 1

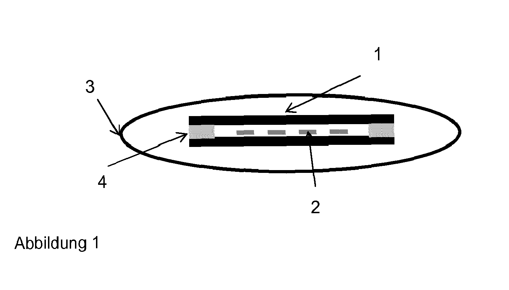

Abbildung 1 zeigt eine schematische Darstellung eines OCA- Entgasungsaufbaus:
1: Glasplatte
2: OCA
3: Plastiksack
4: Abstandhalter

### Abbildung 2

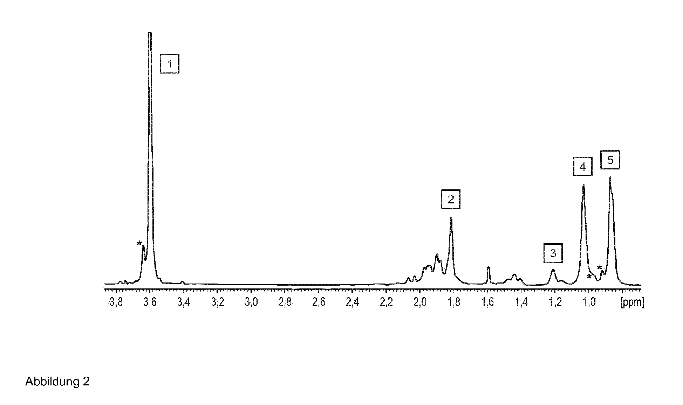

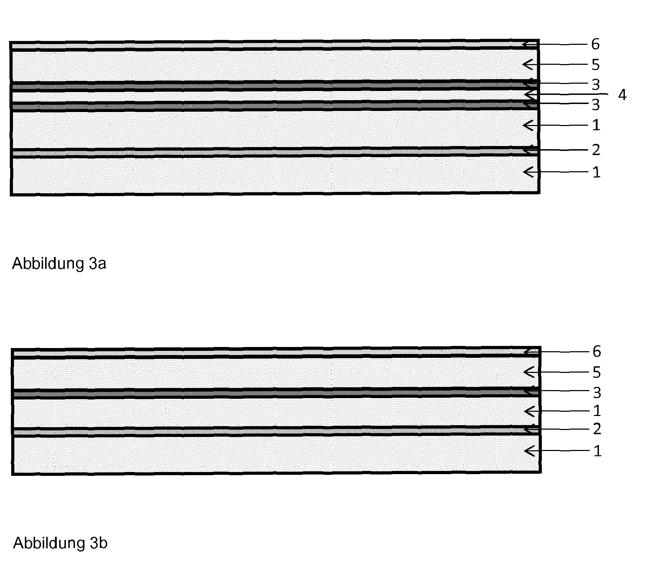

Abbildung 2 zeigt ein Protonen-NMR-Spektrum eines MMA-MA-Copolymers (96-4), 400MHz, CDCl3, 50°C.

Unter den Bezugszeichen sind folgende Angaben zu verstehen:
1 Ester OCH₃
2 Methylen-Polymer-Backbone
3 Methylgruppe isotaktische Triade
4 Methylgruppe heterotaktische Triade
5 Methylgruppe syndiotaktische Triade
* Aufspaltung aufgrund der Acrylat-Gruppen

### Abbildungen 3a und 3b

Die Abbildungen zeigen je eine schematische Darstellung eines Display-Aufbaus, der einen erfindungsgemäßen Verbund enthält.

Die Bezugszeichen der einzelnen Schichten bedeuten:
1. Silikatglas
2. Flüssigkristallschicht
3. Klebeschicht (z.B. OCA)
4. PET-Folie(n) bzw. Silikatglas mit ITO-Elektroden (Berührungssensoren)
5. Kunststoffverglasungsschicht gemäß der vorliegenden Erfindung
6. Kratzfestschicht

Der Schichtverbund von den Schichten 1, 3 und 5 entspricht dem Erfindungsgegenstand der vorliegenden Erfindung. Die Abbildungen zeigen zwei mögliche Ausführungsformen des erfindungsgemäßen Schichtverbundes ohne den Erfindungsgegenstand auf diese Ausführungsformen zu beschränken.

### Detaillierte Beschreibung der Erfindung

Vorzugsweise handelt es sich bei dem erfindungsgemäßen Verbund um einen Laminat-Verbund, weiter bevorzugt um eine Kunststoffverglasung. Der Verbund als Kunststoffverglasung ist jedoch nicht zu verwechseln mit der Kunststoffverglasungsschicht, die in dem erfindungsgemäßen Verbund als Schicht enthalten ist.

Bei einem bevorzugten erfindungsgemäßen Verbund ist die Kunststoffverglasungsschicht auf die Schicht aus anorganischem Glas auflaminiert, wobei die Klebeschicht zwischen diesen beiden Schichten angeordnet ist.

Bei einer Kunststoffverglasungsschicht in einem erfindungsgemäßen Verbund handelt es sich um einen in der Schichtebene biaxial gereckten Kunststoff. Dabei bestehen die erfindungsgemäß einzusetzenden Kunststoffe zu mindestens 80 Gew.-%, vorzugsweise zu mindestens 90 Gew.-%, jeweils bezogen auf das Gesamtgewicht des Kunststoffes, aus Polymethylmethacrylat.

Weiter erfindungsgemäß ist dieser Kunststoff, der zu mindestens 80 Gew.-%, vorzugsweise zu mindestens 90 Gew.-%, jeweils bezogen auf das Gesamtgewicht des Kunststoffes, Polymethylmethacrylat ist, mit einem syndiotaktischen Triadenanteil von mindestens 60 %, vorzugsweise mit einem syndiotaktischen Triadenanteil von mindestens 62 %, jeweils bezogen auf den Gesamt-Triadenanteil des Polymethylmethacrylats, versehen.

Die Taktizität beschreibt die in bestimmten Intervallen wiederkehrende Anordnung von Seitenketten in einem Polymer. "Syndiotaktisch" bedeutet dabei, dass gleiche Seitengruppen in einer gestreckten Polymerkette räumlich gesehen abwechselnd (alternierend) zur einen und zur anderen Seite der Polymerkette zeigen. Syndiotaktische Triaden sind Abschnitte in der Polymerkette, bei denen 3 Seitengruppen in Folge alternierend angeordnet sind.

Bei der Verwendung von Kunststoffverglasungsschichten gemäß dem Stand der Technik in einem Verbund weiter enthaltend
- eine Klebeschicht, vorzugsweise ein optical clear adhesive (OCA) oder ein pressure sensitive adhesive (PSA), und
- eine Schicht aus anorganischem Glas
kommt es zu den ausgeführten Spannungen und partiellen Ablösungen.

Daher ist es sehr überraschend, dass bei einem erfindungsgemäßen Verbund mit einer Kunststoffverglasungsschicht aus einem, wie beschrieben, in der Schichtebene biaxial gereckten Kunststoff aus mindestens 80 Gew.-%, vorzugsweise mindestens 90 Gew.-%, jeweils bezogen auf das Gesamtgewicht des Kunststoffes, Polymethylmethacrylat, wobei das Polymethylmethacrylat einen syndiotaktischen Triadenanteil von mindestens 60 %, vorzugsweise einen syndiotaktischen Triadenanteil von mindestens 62 %, jeweils bezogen auf den Gesamt-Triadenanteil des Polymethylmethacrylats, aufweist, wobei die Kunststoffverglasungsschicht eine Glasübergangstemperatur (TG) von mindestens 116°C, vorzugsweise mindestens 117°C, bevorzugt mindestens 119°C, aufweist, die Nachteile des Standes der Technik deutlich reduziert sind.

Das im erfindungsgemäßen Verbund in der Kunststoffverglasungsschicht enthaltene und wie oben definierte Polymethylmethacrylat wird vorzugsweise durch Polymerisation einer Mischung, enthaltend mindestens 90 Gew.-%, vorzugsweise mindestens 92 Gew.-%, bevorzugt mindestens 94 Gew.-%, Methylmethacrylat (MMA) und 0 bis zu insgesamt 10 Gew.-%, vorzugsweise 0,5 bis zu insgesamt 8 Gew.-%, bevorzugt 1 bis zu insgesamt 6 Gew.-%, jeweils bezogen auf das Gesamtgewicht der Mischung, eines oder mehrere weitere Comonomere, bei denen es sich nicht um MMA handelt, vorzugsweise Alykl(meth)acrylate, erhalten.

Der Ausdruck (Meth)acrylate umfasst Methacrylate und Acrylate sowie Mischungen aus beiden.

Die Herstellung der Homo- und/oder Copolymere aus den zuvor dargelegten Monomeren ist nach den verschiedenen Verfahren der radikalischen Polymerisation an sich bekannt. So können die Polymere in Substanz-, Lösungs-, Suspensions- oder Emulsionspolymerisation hergestellt werden. Die Substanzpolymerisation ist beispielhaft in Houben-Weyl, Band E20, Teil 2 (1987), S. 1145ff. beschrieben. Wertvolle Hinweise hinsichtlich der Lösungspolymerisation finden sich eben dort auf S. 1156ff. Erläuterungen zur Suspensionspolymerisationstechnik finden sich eben dort auf S. 1149ff., während die Emulsionspolymerisation eben dort auf S. 1150ff. ausgeführt und erläutert wird.

Je nach Herstellungsverfahren des für die Kunststoffverglasungsschicht benötigten Polymethylmethacrylats kann die zur Polymerisation vorgesehene Mischung zur Herstellung dieses Polymethylmethacrylats im Sinne der vorliegenden Erfindung neben den oben aufgeführten Monomeren auch zusätzlich Initiator(en), Regler, insbesondere Molekulargewichtsregler, Katalysator(en), Stabilisator(en) und/oder Dispergierhilfsmittel enthalten. Diese zusätzlichen Bestandteile werden in den für den Fachmann üblichen Mengen der Mischung hinzugefügt. Alle Bestandteile der Mischung ergeben zusammen 100 Gew.-%, wobei die Mischung, wie oben definiert, mindestens 90 Gew.-%, vorzugsweise mindestens 95 Gew.-%, Methylmethacrylat (MMA) enthält.

In einer bevorzugten Ausführungsform des erfindungsgemäßen Verbundes besteht der in der Schichtebene biaxial gereckte Kunststoff der Kunststoffverglasungsschicht zu 100 Gew.-% aus dem wie oben definierten Polymethylmethacrylat.

In einer weiteren bevorzugten Ausführungsform des erfindungsgemäßen Verbundes liegt der in der Schichtebene biaxial gereckte Kunststoff der Kunststoffverglasungsschicht als Blend aus mindestens 80 Gew.-%, vorzugsweise aus mindestens 90 Gew.-%, jeweils bezogen auf das Gesamtgewicht des Kunststoffes, Polymethylmethacrylat - wie oben definiert - und aus bis zu insgesamt 20 Gew.-%, vorzugsweise aus bis zu insgesamt 10 Gew.-%, jeweils bezogen auf das Gesamtgewicht des Kunststoffes, einer oder mehrerer Substanzen ausgewählt aus der Gruppe bestehend aus (Co)polymeren, Farbstoffen (insbesondere Pigmenten), Trennmitteln, Antistatika, Antioxidantien, Entformungsmitteln, Flammschutzmitteln, Schmiermitteln, Fließverbesserungsmitteln, Füllstoffen, Lichtstabilisatoren, UV-Stabilisatoren und/oder-Absorbern, Verwitterungsschutzmitteln, Weichmachern und weiteren Additiven, vor. Die Farbstoffe (insbesondere Pigmente), Trennmittel, Antistatika, Antioxidantien, Entformungsmittel, Flammschutzmittel, Schmiermittel, Fließverbesserungsmittel, Füllstoffe, Lichtstabilisatoren, UV-Stabilisatoren und/oder-Absorber, Verwitterungsschutzmittel, Weichmacher und/oder weitere Additive werden ggf. in der für den Fachmann üblichen Menge als Einzelkomponente oder als Mischung von zwei oder mehreren Komponenten eingesetzt, wobei die Gesamtmenge der eingesetzten Komponenten so gewählt ist, dass die Verarbeitbarkeit des Kunststoffes für die Kunststoffverglasungsschicht des erfindungsgemäßen Verbundes nicht gestört ist und die Gesamtmenge des oder der Substanzen nicht 20 Gew.-%, bezogen auf das Gesamtgewicht des Kunststoffes, überschreitet.

Im Folgenden wird für den Fall, dass der in der Schichtebene biaxial gereckte Kunststoff der Kunststoffverglasungsschicht als Blend vorliegt, der Polymethylmethacrylat-Anteil des Blends als "Blend-Komponente A" und der Anteil des Blends, der aus bis zu 20 Gew.-%, vorzugsweise aus bis zu 10 Gew.-%, jeweils bezogen auf das Gesamtgewicht des Kunststoffes, einer oder mehrerer Substanzen ausgewählt aus der Gruppe bestehend aus (Co)polymeren, Farbstoffen (insbesondere Pigmenten), Trennmitteln, Antistatika, Antioxidantien, Entformungsmitteln, Flammschutzmitteln, Schmiermitteln, Fließverbesserungsmitteln, Füllstoffen, Lichtstabilisatoren, UV-Stabilisatoren und/oder-Absorbern, Verwitterungsschutzmitteln, Weichmachern und weiteren Additiven, besteht, als "Blend-Komponente B" bezeichnet.

Weiter erfindungsgemäß bevorzugt ist es, wenn das Blend in der Blend-Komponente B als weiteres (Co)polymer zumindest ein Styrol-Acrylnitril-(Co)polymer (SAN) enthält. Ein hoher Styrolgehalt trägt zu einer weiteren Verminderung der Wasseraufnahme der Kunststoffverglasungsschicht bei und somit auch zu einer Verminderung der beschriebenen Spannungen in der Schichtstruktur des erfindungsgemäßen Verbundes, die ansonsten zu einer Wölbung oder sogar zu einer Ablösung der Schichten führen könnten. Andererseits wird durch einen Styrolgehalt, der insgesamt zu einem Anteil an Styrol-Einheiten in der Kunststoffverglasungsschicht von größer als 25 Gew.-% führt, die Kratzfestigkeit negativ beeinflusst. Auch der Acrylnitril-Anteil des SAN muss so gewählt werden, dass das SAN mit den weiteren Bestandteilen des Kunststoffs der Kunststoffverglasungsschicht verträglich ist.

Erfindungsgemäß besonders bevorzugte Styrol-Acrylnitril-(Co)polymere werden durch die Polymerisation von Mischungen erhalten, die aus
70 bis 92 Gew.-% Styrol
8 bis 30 Gew.-% Acrylnitril und
0 bis 22 Gew.-% weiteren Comonomeren, jeweils bezogen auf das Gesamtgewicht der zu polymerisierenden Monomere für die Styrol-Acrylnitril-(Co)polymere, bestehen.

Ebenso erfindungsgemäß bevorzugt ist es, wenn die Blend-Komponente B einen oder mehrere UV-Stabilisatoren und/oder-Absorber enthält, so dass die Kunststoffverglasungsschicht von 0,01 bis 6,0 Gew.-% UV-Stabilisatoren und/oder-Absorber, bezogen auf das Gesamtgewicht der Kunststoffverglasungsschicht, enthält.

Somit enthält in einer weiteren bevorzugten Ausführungsform des erfindungsgemäßen Verbundes, vorzugsweise gemäß einer der oben dargestellten bevorzugten Ausführungsformen, die Kunststoffverglasungsschicht von 0,01 bis 6,0 Gew.-% UV-Stabilisator(en) und/oder-Absorber, bezogen auf das Gesamtgewicht der Kunststoffverglasungsschicht, wobei der oder die UV-Stabilisator(en) und/oder-Absorber im Blend-Komponenten B-Anteil enthalten sind. Insbesondere bevorzugt sind Mischungen aus UV-Absorber(n) und UV-Stabilisator(en). Bei den UV-Absorbern handelt es sich bevorzugt um Benztriazole, wie z.B. Hydroxyphenylbenztriazole, und/oder um Triazine. Es können aber auch substituierte Benzophenone, Salicylsäureester, Zimtsäureester, Oxalanilide, Benzoxazinone oder Benzyliden-Malonat eingesetzt werden. Bei den UV-Stabilisatoren handelt es sich bevorzugt um sterisch gehinderte Amine (Hindered Amine Light Stabilizer; HALS).

Weiter kann die Blend-Komponente B bevorzugt Poly(meth)acrylate als (Co)polymer(e) enthalten. Der Ausdruck (Meth)acrylate umfasst auch hier Methacrylate und Acrylate sowie Mischungen aus beiden. Unter "Poly(meth)acrylaten" für die Anwendung in der Blend-Komponente B gemäß der vorliegenden Erfindung werden Polymere verstanden, die durch Polymerisation einer Monomerenmischung erhältlich sind, die mindestens 60 Gew.-%, bevorzugt mindestens 80 Gew.-%, (Meth)acrylate aufweist, bezogen auf das Gewicht der Monomeren. Derartige Monomere sind in der Fachwelt weithin bekannt und kommerziell erhältlich.

Hierbei sind bevorzugte Poly(meth)acrylate für die Blend-Komponente B durch Polymerisation von Mischungen erhältlich, die mindestens 20 Gew.-%, insbesondere mindestens 60 Gew.-% und besonders bevorzugt mindestens 80 Gew.-%, jeweils bezogen auf das Gesamtgewicht der zu polymerisierenden Monomere, Methylmethacrylat aufweisen.

Zur Herstellung der Poly(meth)acrylate für die Blend-Komponente B können in der zu polymerisierenden Mischung auch weitere (Co)monomere enthalten sein, unter anderen (Meth)acrylsäure und (Meth)acrylate, die sich von gesättigten Alkoholen ableiten, wie Methyl(meth)acrylat, wobei es sich nicht um Methylmethacrylat handelt, Ethyl(meth)acrylat, Propyl(meth)acrylat, Butyl(meth)acrylat, Pentyl(meth)acrylat, Hexyl(meth)acrylat, 2-Ethylhexyl(meth)acrylat, Heptyl(meth)acrylat; (Meth)acrylate, die sich von ungesättigten Alkoholen ableiten, wie z. B. Oleyl(meth)acrylat, 2-Propinyl(meth)acrylat, Allyl(meth)acrylat, Vinyl(meth)acrylat usw.;
Amide und Nitrile der (Meth)acrylsäure, wie N-(3-Dimethylaminopropyl)(meth)acrylamid, N-(Diethylphosphono)(meth)acrylamid, 1-Methacryloylamido-2-methyl-2-propanol; Cycloalkyl(meth)acrylate, wie 3-Vinylcyclohexyl(meth)acrylat, Bornyl(meth)acrylat;
Hydroxylalkyl(meth)acrylate, wie 3-Hydroxypropyl(meth)acrylat, 3,4-Dihydroxybutyl(meth)acrylat, 2-Hydroxyethyl(meth)acrylat, 2-Hydroxypropyl(meth)acrylat;
Glycoldi(meth)acrylate, wie 1,4-Butandiol(meth)acrylat, (Meth)acrylate von Etheralkoholen, wie Tetrahydrofurfuryl(meth)acrylat, Vinyloxyethoxyethyl(meth)acrylat; und
mehrwertige (Meth)acrylate, wie Trimethyloylpropantri(meth)acrylat.

Neben den zuvor dargelegten (Meth)acrylaten können zur Herstellung der Poly(meth)acrylate auch weitere ungesättigte Monomere eingesetzt werden, die mit den zuvor genannten (Meth)acrylaten copolymerisierbar sind. Im allgemeinen werden diese Verbindungen in einer Menge von 0 bis 40 Gew.-%, vorzugsweise 0 bis 20 Gew.-%, jeweils bezogen auf das Gesamtgewicht der Monomere, eingesetzt, wobei die Comonomere einzeln oder als Mischung verwendet werden können. Hierzu gehören unter anderem 1-Alkene, wie Hexen-1, Hepten-1; verzweigte Alkene, wie beispielsweise Vinylcyclohexan, 3,3-Dimethyl-1-propen, 3-Methyl-1-diisobutylen, 4-Methylpenten-1;
Vinylester, wie Vinylacetat;
Styrol, substituierte Styrole mit einem Alkylsubstituenten in der Seitenkette, wie z. B. α-Methylstyrol und α-Ethylstyrol, substituierte Styrole mit einem Alkylsubstitutenten am Ring, wie Vinyltoluol und p-Methylstyrol, halogenierte Styrole, wie beispielsweise Monochlorstyrole, Dichlorstyrole, Tribromstyrole und Tetrabromstyrole;
Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole;
Vinyl- und Isoprenylether;
Maleinsäurederivate, wie beispielsweise Maleinsäureanhydrid,
Methylmaleinsäureanhydrid, Maleinimid, Methylmaleinimid; und
Diene, wie beispielsweise Divinylbenzol.

Es ist dem Fachmann bekannt, dass bestimmte Monomere zur Beeinflussung der Schlagzähigkeit, der optischen Eigenschaften, sowie der thermischen Stabilität geeignet sind und im Rahmen der vorliegenden Erfindung eingesetzt werden können.

Die Blend-Komponente B kann erfindungsgemäß vorzugsweise (Co)polymer(e) enthalten, die weitere Monomereeinheiten enthalten, die sich beispielsweise aus Estern der Acryl- oder Methacrylsäure, insbesondere mit niedrigen Alkoholen mit 1 - 4 C-Atomen, Styrol, Maleinsäure oder deren Anhydrid, Itakonsäure oder deren Anhydrid, Vinylpyrrolidon, Vinylchlorid oder Vinylidenchlorid ergeben.

In der Blend-Komponente B sind in einer erfindungsgemäß bevorzugten Ausführungsform verschiedene Poly(meth)acrylate enthalten, die sich beispielsweise im Molekulargewicht oder in der Monomerzusammensetzung unterscheiden.

Die Herstellung der (Meth)acrylat-Homo- und/oder Copolymere aus den zuvor dargelegten Monomeren ist nach den verschiedenen oben schon dargestellten Verfahren der radikalischen Polymerisation an sich bekannt. So können die Polymere ebenso in Substanz-, Lösungs-, Suspensions- oder Emulsionspolymerisation hergestellt werden.

Vorzugsweise kann die Blend-Komponente B erfindungsgemäß Poly(N-methylmethacrylimide) (PMMI) und/oder Polymethylmethacrylate (PMMA) umfassen. Poly(N-methylmethacrylimide) (PMMI), Polymethylmethacrylate (PMMA) und/oder PMMI-PMMA-Copolymere sind vorzugsweise Copolymere von PMMI und PMMA, welche durch teilweise Cycloimidisierung des PMMA hergestellt werden. PMMI, welches durch Teilimidisierung von PMMA hergestellt wird, wird üblicherweise so hergestellt, dass maximal 83 % des eingesetzten PMMA imidisiert werden. Das dabei entstehende Produkt wird als PMMI bezeichnet, ist streng genommen aber ein PMMI-PMMA-Copolymer. Sowohl PMMA als auch PMMI oder PMMI-PMMA-Copolymere sind kommerziell erhältlich, z. B. unter dem Markennamen Pleximid® der Evonik Industries AG. Ein beispielhaftes Copolymer (Pleximid® 8803) hat 33 % MMI (=Methylmethacrylimid)-Einheiten, 54,4 % MMA-Einheiten, 2,6 % Methacrylsäureeinheiten und 1,2 % Anhydrideinheiten. Die Produkte sowie ihre Herstellung sind bekannt (Hans R. Kricheldorf, Handbook of Polymer Synthesis, Part A, Verlag Marcel Dekker Inc. New York - Basel - Hongkong, S. 223 f.; H. G. Elias, Makromoleküle, Hüthig und Wepf Verlag Basel - Heidelberg - New York; US-PSS 2 146 209, 4 246 374).

Im Allgemeinen gilt für erfindungsgemäß eingesetzte Homo- und/oder Copolymere, insbesondere für Homo- und/oder Copolymere die vorangehend beschrieben worden sind, dass das Gewichtsmittel des Molekulargewichts M_{w} dieser Homo- und/oder Copolymere in weiten Bereichen schwanken kann, wobei das Molekulargewicht üblicherweise auf den Anwendungszweck und die Verarbeitungsweise der finalen Zusammensetzung abgestimmt wird. Im Allgemeinen liegt es aber im Bereich von 20.000 bis 1.000.000 g/mol, vorzugsweise von 50.000 bis 500.000 g/mol und besonders bevorzugt von 80.000 bis 300.000 g/mol, ohne dass hierdurch eine Einschränkung erfolgen soll.

Überraschend wurde gefunden, dass es bei dem erfindungsgemäßen Verbund mit dem in der Schichtebene biaxial gereckten Kunststoff der erfindungsgemäßen Kunststoffverglasungsschicht zu einer reduzierten thermischen Ausdehnung und zu einer reduzierten Ausdehnung durch Wasseraufnahme in die beiden Reckrichtungen kommt. Dagegen wird die Ausdehnung in die Richtung der Schichtdicke, d.h. in die Richtung, in die nicht gereckt worden ist, größer als bei einem ungereckten Material. Eine Ausdehnung in Richtung der Schichtdicke führt jedoch nicht zu den oben geschilderten Spannungen in dem erfindungsgemäßen Verbund gemäß des Standes der Technik und ist insbesondere für die vorliegende Anwendung unkritisch. Zudem führt die biaxiale Reckung des Kunststoffes der erfindungsgemäßen Kunststoffverglasungsschicht zu einer Erhöhung der Schlagzähigkeit dieser Schicht und somit des erfindungsgemäßen Verbundes, was insbesondere für die vorliegende Anwendung ebenfalls von großem Vorteil ist.

In einer besonders bevorzugten Ausführungsform ist die Kunststoffverglasungsschicht in dem erfindungsgemäßen Verbund nach der Extrusion vernetzt oder wird durch eine Nachbehandlung nach der Extrusion und vor der Reckung vernetzt.

Es sind verschiedene Vernetzungsmechanismen, die entweder während der Extrusion oder aber in einer thermischen oder photoinduzierten Nachbehandlung erfolgen, denkbar. In einer besonderen Variante erfolgt die Vernetzung dadurch, dass das Polymethylmethacrylat (aus welchem zumindest 80 Gew.-%, vorzugsweise zumindest 90 Gew.-%, des in der Schichtebene biaxial gereckten Kunststoffs besteht) unter Copolymerisation von 0,25 bis 0,5 Gew.-% Triallylcyanorat hergestellt wurde. Bevorzugt enthält das verwendete Polymethylmethacrylat (aus welchem zumindest 80 Gew.-%, vorzugsweise zumindest 90 Gew.-% des in der Schichtebene biaxial gereckten Kunststoffs bestehen) keine Schlagzähmodifizierungsmittel.

Erfindungsgemäß besonders bevorzugt enthält die gesamte Kunststoffverglasungsschicht kein Schlagzähmodifizierungsmittel.

Solche Schlagzähmodifizierungsmittel könnten ggf. die optischen Eigenschaften in dem erfindungsgemäßen Verbund, und insbesondere dessen Verwendung als Display oder Teil eines Displays, stören und die Kratzfestigkeit reduzieren. Überraschend wurde jedoch gefunden, dass die Kunststoffverglasungsschichten aus einem in der Schichtebene biaxial gereckten Kunststoff gemäß der vorliegenden Erfindung in einem erfindungsgemäßen Verbund an sich eine bereits ausreichende Schlagzähigkeit aufweisen.

Die erfindungsgemäß verwendete Kunststoffverglasungsschicht muss nicht zwingend aus einem einschichtigen Aufbau und/oder nur einem Matrixmaterial - dem Polymethylmethacrylat - bestehen. Bevorzugt ist die Kunststoffverglasungsschicht in einem erfindungsgemäßen Verbund dennoch einschichtig.

Bevorzugt weist die Kunststoffverglasungsschicht aus dem in der Schichtebene biaxial gereckten Kunststoff in einem erfindungsgemäßen Verbund eine Dicke von 0,1 bis 1,5 mm, vorzugsweise von 0,3 bis 1,0 mm, besonders bevorzugt von 0,4 bis 0,9 mm auf.

In einer besonderen Ausführungsform weist die Kunststoffverglasungsschicht innerhalb des erfindungsgemäßen Verbundes ein- oder beidseitig eine Kratzfestbeschichtung auf, wobei bei beidseitiger Kratzfestbeschichtung die beiden Kratzfestbeschichtungen gleich oder verschieden sein können. Bei diesen Kratzfestbeschichtungen handelt es sich insbesondere um thermisch oder UV-vernetzte Lacke, insbesondere auf Basis von Acrylaten oder Silikonen. Diese Lacke können weiterhin die Kratzfestigkeit verbessernde Nanopartikel, z.B. auf Basis von Siliziumoxiden, enthalten. Oftmals enthalten sie auch Silikatkügelchen, um eine Antiglarewirkung zu erzielen. Bei der Auswahl der zusätzlichen Partikel ist jedoch sehr darauf zu achten, dass diese derart klein sind, dass es zu keiner Lichtbrechung kommt, bzw. dass diese Partikel den gleichen Brechungsindex aufweisen wie der verwendete Lack. Die Lacke werden vorzugsweise im Dipcoating, Spraycoating, Spincoating, etc. aufgebracht. Direktes PVD Coating auf Polymethylmethacrylat und damit auf eine erfindungsgemäße Kunststoffverglasungsschicht funktioniert dagegen nur schlecht.

Weiter ist es für einen erfindungsgemäßen Verbund insbesondere bevorzugt, dass die eine Kratzfestbeschichtung oder mindestens eine der Kratzfestbeschichtungen mittels Plasmabehandlung aufgetragen wird.

Erfindungsgemäß sind ebenso Ausführungsformen umfasst, die zwischen der Kunststoffverglasungsschicht und einer Kratzfestbeschichtung und/oder zwischen der Schicht aus anorganischem Glas und einer Kratzfestbeschichtung zumindest eine weitere Schicht enthalten. Bei diesen Ausführungsformen weist der erfindungsgemäße Verbund vorzugsweise mindestens auf einer seiner äußeren Oberflächen eine Kratzfestbeschichtung auf. Die Kratzfestbeschichtung bildet dann die äußere Oberfläche sobald sie auf den erfindungsgemäßen Verbund aufgebracht worden ist.

Bei einer weiteren bevorzugten Ausführungsform ist die eine oder mehrere der Oberfläche(n), auf die die eine oder mehrere Kratzfestbeschichtung(en) aufgebracht wird/werden, mittels Corona vorbehandelt worden.

Die vorliegende Erfindung umfasst ebenso erfindungsgemäße Verbunde, vorzugsweise nach einer der schon beschriebenen bevorzugten Ausführungsformen, die insbesondere auf der Kunststoffverglasungsschicht, ggf. auch auf oder unter einer zusätzlichen Kratzfestbeschichtung, ein- oder beidseitig zumindest eine weitere funktionale Schicht, vorzugsweise eine Anti-Fingerprint-, eine Anti-Reflex- und/oder eine antibakterielle Schicht, aufweisen.

Ein insbesondere bevorzugter erfindungsgemäßer Verbund ist dadurch gekennzeichnet, dass die Kunststoffverglasungsschicht aus dem in der Schichtebene biaxial gereckten Kunststoff mittels Extrusion und anschließender zweifacher Reckung, vorzugsweise zweifacher Inline-Reckung, in Extrusionsrichtung und senkrecht dazu, sequentiell oder simultan hergestellt wurde. Somit wird für die biaxiale Reckung der erfindungsgemäßen Kunststoffverglasungsschicht eine Inline-Reckung in Kombination mit einem Extrusionsprozess verwendet. Ein solches Verfahren ist grundsätzlich z.B. bei der Herstellung dünner PET-Folien mit einer Dicke zwischen 0,01 und 0,2 mm bekannt. Für überwiegend Polymethylmethacrylat-haltige Kunststoffe für Kunststoffverglasungsschichten gemäß der vorliegenden Erfindung mit einer bevorzugten Dicke zwischen 0,1 mm und 1,5 mm müssen die Prozessparameter wie die Umgebungs-Temperatur, der Reckfaktor und die Reckgeschwindigkeit entsprechend angepasst werden. Unter dem "Reckfaktor" ist im Sinne der vorliegenden Erfindung als Faktor zu verstehen, um den die Ursprungsdimension vergrößert wird.

Unter "zweifacher Inline-Reckung biaxial in der Schichtebene" wird eine zweifache Reckung in Extrusionsrichtung und senkrecht dazu verstanden, die zudem inline erfolgt. Mit anderen Worten ausgedrückt erfolgt die Reckung einmal in Richtung der Extrusionsrichtung und einmal senkrecht zu der Extrusionsrichtung und somit zweifach. Von der Erfindung umfasst sind die beiden Möglichkeiten, dass die zweifache Inline-Reckung in Extrusionsrichtung und senkrecht dazu, d.h. die zweifache Inline-Reckung biaxial in der Schichtebene, sequentiell oder simultan erfolgt. Insbesondere wird die Reckung, vorzugsweise die Inline-Reckung, des Kunststoffes für die Kunststoffverglasungsschicht des erfindungsgemäßen Verbundes dabei in beide Richtungen jeweils bei einer Umgebungstemperatur im Ofen zwischen 120 und 180 °C, vorzugsweise zwischen 140 und 170 °C, durchgeführt. Bevorzugt erfolgt die Reckung, vorzugsweise die Inline-Reckung, des Kunststoffes für die Kunststoffverglasungsschicht des erfindungsgemäßen Verbundes in beide Richtungen jeweils mit einem Reckfaktor von 1,5 bis 4,0, weiter vorzugsweise von 1,75 bis 3,5, und besonders bevorzugt von 2,0 bis 3,0. Ein Reckfaktor von 2,0 bedeutet, dass die Länge in die Reckrichtung verdoppelt wird (z.B. Länge entlang der Reckrichtung vor Reckung: 100 mm und Länge entlang der Reckrichtung nach Reckung mit Reckfaktor von 2,0: 200 mm). Dabei wird bevorzugt eine Reckgeschwindigkeit von 10% bis 50% pro Sekunde, besonders bevorzugt von 13% bis 40% pro Sekunde, eingestellt (d.h. bei einer Länge entlang der Reckrichtung bei Sekunde 0 von 100 mm und einer Reckgeschwindigkeit von 10% pro Sekunde liegt nach Sekunde 1 eine Länge entlang der Reckrichtung von 110 mm vor). Die prozentuale Angabe der Reckgeschwindigkeit ist die Angabe der prozentualen Vergrößerung pro Sekunde.

Vorzugsweise ist die wie oben definierte Kunststoffverglasungsschicht mittels eines optical clear adhesive (OCA) oder eines pressure sensitive adhesive (PSA) mit der darunter liegenden Schicht aus anorganischem Glas zu einem erfindungsgemäßen Verbund verbunden. Die Auswahl geeigneter OCA oder PSA sind dem Fachmann dabei allgemein geläufig. Diese Klebeschicht verbessert die mechanische Stabilität des erfindungsgemäßen Verbundes, insbesondere auch wenn der erfindungsgemäße Verbund ein Display oder eine Displayabdeckung oder ein Teil eines Displays oder einer Displayabdeckung ist. Die Klebeschicht reduziert weiterhin die Lichtreflexion an den Grenzflächen der Schichten.

In einer weiteren erfindungsgemäßen Ausführungsform ist die wie oben definierte Kunststoffverglasungsschicht mittels eines optical clear adhesive (OCA) oder eines pressure sensitive adhesive (PSA) mit einer darunter liegenden Schicht verbunden, an die sich die Schicht aus anorganischem Glas oder ggf. noch eine weitere sogenannte Zwischenschicht anschließt. In diesem Fall ist die Klebeschicht bzw. OCA oder PSA nicht direkt mit der Schicht aus anorganischem Glas verbunden.

Erfindungsgemäß enthält der Verbund der vorliegenden Erfindung mindestens eine Schicht aus anorganischem Glas. Im Sinne der Erfindung wird unter einer Schicht aus anorganischem Glas eine Schicht aus Glas auf Siliciumdioxid-Basis verstanden. Für die vorliegende Erfindung werden mit diesem Verständnis anorganisches Glas und Silikatglas als Synonyme verwendet. Erfindungsgemäß ist u.a. eine Silikatglasschicht mit aufgedampften Indium-Zinnoxid-Elektroden bevorzugt.

Wie schon weiter oben hinsichtlich Kratzfestbeschichtungen oder anderen ggf. funktionalen Schichten ausgeführt kann ein erfindungsgemäßer Verbund neben den definierten Schichten, der Kunststoffverglasungsschicht, der Klebeschicht und der Schicht aus anorganischem Glas, weitere Schichten umfassen. In der Regel handelt es sich bei mindestens einer der Schichten, die sich unter der Kunststoffverglasung und im Verbund befinden, um eine Schicht mit sehr geringer Wasseraufnahme und einer sehr geringen Temperaturausdehnung. Eine solche Schicht kann zum Beispiel die Funktion eines Touchsensors beinhalten. Erfindungsgemäß bevorzugt ist es, wenn die Schicht mit Funktion eines Touchsensors eine Schicht aus anorganischem Glas ist. Ein erfindungsgemäßes Beispiel für eine solche Schicht ist eine Silikatglasscheibe mit aufgedampften Indium-Zinnoxid-Elektroden.

Bei einem erfindungsgemäßen Verbund, vorzugweise gemäß einer der bevorzugten Ausführungsformen, erfolgt bei einer Lagerung von mindestens 72h bei einer Temperatur von 85°C und 85% relativer Luftfeuchte nahezu keine, vorzugsweise keine, Ablösung von einer oder mehreren der Schichten auf. Ein erfindungsgemäßer Verbund weist nahezu keinen, vorzugsweise keinen, Verzug und/oder nahezu keine, vorzugsweise keine, Verwerfung auf.

Die vorliegende Erfindung umfasst weiter den Gegenstand eines Displays, dadurch gekennzeichnet, dass dieses Display einen wie oben beschriebenen erfindungsgemäßen Verbund enthält oder aus ihm besteht und/oder dass dieses Display unter Verwendung eines dieser erfindungsgemäßen Verbunde hergestellt wurde, wobei das Display vorzugsweise ein LCD-, OLED- oder elektrophoretisches Display ist.

Damit sind neben den erfindungsgemäßen Verbunden in Displays, diese Displays selbst, die unter Verwendung der genannten erfindungsgemäßen Verbunde hergestellt werden, gleichsam Bestandteil der vorliegenden Erfindung.

Weiterhin ist das Verfahren zur Herstellung eines wie oben definierten erfindungsgemäßen Verbundes, vorzugsweise eines wie oben definierten bevorzugten erfindungsgemäßen Verbundes, Bestandteil der vorliegenden Erfindung. Bei einem erfindungsgemäßen Verfahren handelt es sich um ein Verfahren, das einen Schritt zur Herstellung der oben definierten Kunststoffverglasungsschicht, vorzugsweise einer oben als bevorzugt definierten Kunststoffverglasungsschicht, enthält, wobei es sich um ein Extrusionsverfahren mit anschließender Glättung und biaxialer Reckung handelt, und wobei die für diesen Schritt verwendete Anlage mindestens die folgenden Komponenten enthält:
einen Extruder,
eine optionale Schmelzepumpe,
eine optionale Schmelzefiltration,
ein optionales statisches Mischelement,
eine Plattendüse,
ein Glättwerk,
eine Vorrichtung zur Reckung der Platte in Extrusionsrichtung und senkrecht zur Extrusionsrichtung und der dazugehörigen Temperierungseinheit
und optional einen Wickler,
und wobei die Kunststoffverglasungsschicht über eine Klebeschicht, vorzugsweise ein optical clear adhesive (OCA) oder ein pressure sensitive adhesive (PSA), mit einer Schicht aus anorganischem Glas direkt oder über mindestens eine weitere Schicht verbunden wird, vorzugsweise laminiert wird.

Extrusionsverfahren von Polymeren zu Platten sind weithin bekannt und beispielsweise in Kunststoffextrusionstechnik II, Hanser Verlag, 1986, S. 125 ff oder insbesondere in "Konstruieren mit Kunststoffen", Carl Hanser Verlag, 1972, S. 65 ff beschrieben. Hier sind auch weitere Ausführungsformen der einzelnen Anlagenkomponenten ausgeführt.

Bei dem Schritt zur Herstellung der oben definierten Kunststoffverglasungsschicht, vorzugsweise einer oben als bevorzugt definierten Kunststoffverglasungsschicht, wobei es sich um ein Extrusionsverfahren mit anschließender Glättung und biaxialer Reckung handelt, wird bevorzugt eine heiße Schmelze aus der Düse eines Extruders auf einen Spalt zwischen zwei Glättwalzen extrudiert. Die optimale Temperatur der Schmelze ist beispielsweise von ihrer Zusammensetzung abhängig und kann daher in weiten Bereichen schwanken. Bevorzugte Temperaturen der Schmelze, d.h. einer Formmasse aus der der Kunststoff der Kunststoffverglasungsschicht für einen erfindungsgemäßen Verbund entsteht, bis zum Düseneintritt liegen im Bereich von 150 bis 300 °C, besonders bevorzugt im Bereich von 180 bis 270 °C und ganz besonders bevorzugt im Bereich von 200 bis 260 °C. Die Temperatur der Glättwalzen ist vorzugsweise kleiner oder gleich 150 °C, bevorzugt zwischen 60 °C und 140 °C.

In einer Ausführungsform wird die Temperatur der Düse vorzugsweise höher als die Temperatur der Schmelze vor dem Düseneintritt gewählt. Bevorzugt wird die Düsentemperatur um mindestens 10 °C höher eingestellt als die Temperatur der Schmelze vor dem Düseneintritt. Die bevorzugten Temperaturen der Düse liegen im Bereich von 190 °C bis 300 °C, besonders bevorzugt 220 °C bis 280 °C.

Das erfindungsgemäß verwendete Glättwerk besteht aus zwei, drei oder vier Glättwalzen, bevorzugt aus drei Glättwalzen. Glättwalzen sind in der Fachwelt weithin bekannt, wobei zum Erhalt eines hohen Glanzes polierte Walzen verwendet werden. In dem erfindungsgemäßen Verfahren können aber auch andere Walzen als Glättwalze verwendet werden. Durch den Spalt zwischen den beiden ersten Glättwalzen wird ein breiter Film gebildet, der durch die gleichzeitige Abkühlung zu einer Platte wird.

Um eine besonders gute Oberflächenqualität der Kunststoffverglasungsschicht zu erzielen, weisen Düse und Walzen bevorzugt Chromoberflächen auf. Ganz besonders bevorzugt haben diese Chromoberflächen eine Rauigkeit Ra (gemäß DIN 4768) kleiner 0,10 µm, bevorzugt kleiner 0,08 µm.

Der Druck mit dem die Schmelze in die Düse gepresst wird, kann beispielsweise über die Geschwindigkeit der Schnecke gesteuert werden. Der Druck liegt im Allgemeinen in einem Bereich von 40 bis 150 bar, ohne dass das erfindungsgemäße Verfahren hierdurch beschränkt wird. Die Geschwindigkeit, mit der die Platten erfindungsgemäß erhalten werden können, ist dementsprechend im Allgemeinen größer als 1 m/min, insbesondere größer als 2 m/min.

Zur Sicherstellung einer gleichmäßigen Schmelzeförderung kann zusätzlich eine Schmelzepumpe vor der Düse eingebaut sein.

Damit die entstehende Platte weitgehend frei von Verunreinigungen ist, wird vor dem Eintritt der Schmelze in die Düse optional ein Filter angeordnet. Die Maschenweite des Filters richtet sich im Allgemeinen nach den eingesetzten Ausgangsstoffen und kann dementsprechend in weiten Bereichen variieren. Im Allgemeinen liegen sie im Bereich von 300 µm bis 20 µm. Es können auch Filter mit mehreren Sieben unterschiedlicher Maschenweite vor dem Düseneintritt angeordnet werden. Diese Filter sind kommerziell erhältlich. Um Folien mit hoher Güte zu erhalten, ist es des Weiteren vorteilhaft besonders reine Rohstoffe einzusetzen.

Optional kann darüber hinaus vor der Düse ein statisches Mischelement eingebaut sein. Über dieses können die Komponenten der Schmelze gemischt und/oder ggf. Pigmente, Stabilisatoren oder Additive in die Polymerschmelze zugegeben werden.

Über das statische Mischelement können bis zu 5 Gew.-% eines zweiten Polymers, zum Beispiel in Form einer Schmelze aus einem zweiten Extruder zu der Schmelze gemischt werden, d.h. wenn die Schmelze aus der der Kunststoff der Kunststoffverglasungsschicht für einen erfindungsgemäßen Verbund entsteht, als Blend vorliegen soll.

Das erfindungsgemäße Verfahren enthält den Schritt des biaxialen Reckens der aus der Schmelze durch den Extrusionsvorgang hergestellten Platte. Diese biaxiale Reckung kann sequenziell durchgeführt werden. Dies erfolgt z.B. zuerst in Extrusionsrichtung durch Verwendung von Glättwerken mit zunehmender Bahngeschwindigkeit und anschließender Reckung in Querrichtung durch Verwendung von Klammern am Rand der Platte, die man senkrecht zur Extrusionsrichtung auseinanderzieht. Alternativ und gleichzeitig bevorzugt erfolgt das Recken jedoch simultan in beide Richtungen und zwar dadurch, dass die Klammern am Rand der Extrusionsplatte gleichzeitig ihren Abstand senkrecht zur Extrusionsrichtung und längs der Extrusionsrichtung vergrößern. Beim Reckprozess ist auf eine möglichst gleichmäßige Temperierung der Platte zu achten, um eine möglichst gleichmäßige Dickenverteilung (+/- 5%) über die gesamte Platte zu erzielen.

Ein bevorzugtes erfindungsgemäßes Verfahren führt eine biaxiale Inline-Reckung in direktem Anschluss an die Plattenextrusion durch. Dazu wird die erhaltene Platte mittels einer biaxial wirkenden Reckvorrichtung gereckt. Die Reckvorrichtung besteht bevorzugt aus in einem Rundlauf in einem Abstand von z.B. 45 mm zu einander angeordneten Klammern, die auf beiden Seiten jeweils einzeln an die Platte geführt werden und über eine Strecke von z.B. 180 mm recken. Die Klammern recken sowohl in als auch orthogonal zur Extrusionsrichtung. Dazu vergrößern sowohl die nebeneinander liegenden als auch die gegenüberliegenden Klammern kontinuierlich und bevorzugt simultan den Abstand zueinander. Die Streckung erfolgt somit in beide Richtungen simultan bei konstanter Reckgeschwindigkeit.

Ein gemäß dem beschriebenen Verfahren der vorliegenden Erfindung hergestellter Verbund, enthaltend eine wie oben dargestellt hergestellte Kunststoffverglasungsschicht zeigt eine besonders hohe Beständigkeit gegen Witterungseinflüsse, insbesondere gegen UV-Bestrahlung.

Das erfindungsgemäße Verfahren zur Herstellung von erfindungsgemäßen Verbunden ist besonders einfach und kostengünstig durchzuführen.

Weiterhin haben die bei dem erfindungsgemäßen Verfahren hergestellten Kunststoffverglasungsschichten den Vorteil, dass sie sich leicht auf gewünschte Formate zuschneiden oder stanzen lassen. Auch bei dem Extrusionsvorgang für die Herstellung der Kunststoffverglasungsschicht des erfindungsgemäßen Verbundes ist die Sprödigkeit so gering, dass das Risiko eines Bahnabrisses minimiert ist und die Kunststoffverglasungsschicht, die vorzugsweise als Folie vorliegt, bei hohen Extrusionsgeschwindigkeiten hergestellt werden kann.

### Meßmethoden

### Bestimmung des Anteils an syndiotaktischen Triaden:

Für die Bestimmung der Taktizität eines PMMA-Polymers wird ein Protonen-NMR-Spektrum, das bei einer Protonenfrequenz von mindestens 300 MHz in Deuterochloroform bei 50° C aufgezeichnet wird, benutzt. Der Bereich von 0.7 bis 1.3 ppm wird vergrößert und muss die integrierten Flächen der Signale der Methylgruppen der Hauptkette zeigen. Die iso-, hetero-und syndiotaktischen Triaden zeigen eine Resonanz bei 1.21, 1.03 und 0.86 ppm. Coacrylat-Einheiten können durch eine geteilte Methylresonanz bei 3.64 ppm erkannt werden. Zur Quantifizierung des Acrylatgehaltes kann eine Pyrolyse-GC- oder eine Pyrolyse-IR-Analyse durchgeführt werden.

In Abbildung 2 ist exemplarisch ein Protonen-NMR-Spektrum von einem MMA-MA Copolymer (96 Gew.-% MMA und 4 Gew.-% MA), bei 400 MHz, in Deuterochloroform bei 50° C gezeigt (Bezugszeichenerklärung siehe oben).

### Glasübergangstemperatur (TG):

Die TG-Werte wurden gemäß der folgenden Norm ermittelt: ISO 11357-2:2013-05 Kunststoffe - Dynamische Differenz-Thermoanalyse (DSC) - Teil 2: Bestimmung der Glasübergangstemperatur und Stufenhöhe.

### Lösungsviskositätszahl:

Die Lösungsviskositätszahl wurde in Chloroform bei 25 °C (ISO 1628-6: 1990 (E)) bestimmt.

Die nachfolgenden Beispiele dienen der näheren Erläuterung und dem besseren Verständnis der vorliegenden Erfindung, schränken diese bzw. deren Umfang jedoch in keiner Weise ein.

### Beispiele

### I. Materialien

Als Materialien wurden 3 verschiedene Kunststoffverglasungsschichten (= Komponente a)), 3 OCA-Folienstücke (= Komponente b)) und 3 Glassplatten (= Komponente c)) verwendet.

### Komponente a)

### 1) Zusammensetzung z1) - für Vergleichsbeispiel 1:

Es wurde ein Copolymer aus 96 Gew.-% Methylmethacrylat und 4 Gew.-% Methylacrylat mit einer Lösungsviskositätszahl von 71 cm³/g in Chloroform bei 25 °C (ISO 1628-6: 1990 (E)) verwendet. Ein solches Copolymer ist im Handel als Formmasse PLEXIGLAS^{®} 7H in Granulatform von der Firma Evonik Industries AG erhältlich.

Dieses Standard-Polymethylmethacrylat, d.h. diese Zusammensetzung z1), hat einen Anteil an syndiotaktischen Triaden von 51 % und eine TG von 112°C.

### 2) Zusammensetzung z2) - für Vergleichsbeispiel 2:

Die Zusammensetzung z2) entspricht der oben definiertenZusammensetzung z1). Die Zusammensetzungen z1) und z2) unterscheiden sich nicht, d.h. auch die Zusammensetzung z2) hat die unter 1) genannten Eigenschaften, und insbesondere einen Anteil an syndiotaktischen Triaden von 51 % und eine TG von 112°C.

### 3) Herstellung einer Zusammensetzung z3) - für das erfindungsgemäße Beispiel:

Nach folgender Herstellungsvorschrift wurde eine Zusammensetzung z3) erhalten:
- Apparatur:
Verwendet wurde ein 600 kg Emaille-Reaktor mit Impeller-Rührer.
- Reaktionsansatz:

**Wasserphase:**

| | | |
|---|---|---|
| 199 | kg | ention. Wasser |
| 2,06 | kg | Al₂(SO₄)₃ x 14 H₂O als 48,5%ige Lösung |
| 0,44 | kg | Soda, fest |
| 0,01 | kg | C15-Paraffinsulfonat (Na-Salz) |
| 0,01 | kg | Polyethylenglycol |
| 0,03 | kg | 2-(2'-Hydroxy-5'-methylphenyl) benzotriazol |

**Monomerphase:**

| | | |
|---|---|---|
| 99 | kg | Methylmethacrylat |
| 1 | kg | Methylacrylat |
| 0,4 | kg | tert-Butylperpivalat (= 8,0g 75%ig) |
| 0,25 | kg | Pentaerythrittetrathioglycolat |
| 0,25 | kg | 2-Ethylhexylthioglycolat |

### - Herstellung Zusammensetzung z3):

Die gesamte Wassermenge und das Aluminiumsulfat werden unter Rühren und Stickstoffüberleitung vorgelegt und auf 54°C aufgeheizt. Bei Erreichen der vorgegebenen Innentemperatur wird das Soda zur Fällung des Aluminiumhydroxides zugegeben. Anschließend erfolgt die Zugabe des Paraffinsulfonates und des Polyethylenglycols. Danach wird die Monomeren-Phase (tert-Butylperpivalat, Pentaerythrittetrathioglycolat und 2-Ethylhexylthioglycolat sind in den Monomeren gelöst) in Batchform zugegeben. Die Polymerisation erfolgt bei 54°C. Nach dem Temperaturmaximum wird noch 1 Stunde bei 85°C nacherhitzt. Anschließend wird auf 40°C abgekühlt und mit 2kg 50%iger Schwefelsäure angesäuert. Der Ansatz wird weiter abgekühlt, auf eine Metallsieb-Nutsche (90 µm) abgelassen und mit VE-Wasser neutral gewaschen. Das Perlpolymerisat wird etwa 40h bei 50°C getrocknet (Hordentrocknung).

Das hergestellte Perlpolymerisat hat einen Anteil an syndiotaktischen Triaden von 62,5 % und eine Lösungsviskositätszahl von 58,8 cm³/g in Chloroform bei 25 °C (ISO 1628-6: 1990 (E)).

Weiter wurde das erhaltene Perlpolymerisat über einen Extruder zum Granulat entgast, welches eine TG von 120°C aufweist und eine Lösungsviskositätszahl von 59,0 cm³/g in Chloroform bei 25 °C (ISO 1628-6: 1990 (E)) hat.

### Herstellung der Kunststoffverglasungsschichten a1), a2) und a3)

Über einen Extruder wurde das jeweilige Granulat der Zusammensetzungen z1), z2) und z3) zu den Kunststoffverglasungsschichten a1), a2) bzw. a3) mit den Ausmaßen gemäß Tabelle 1 extrudiert. Die Extrusion erfolgte über einen Extruder mit 9 Heizzonen, einer Breitschlitzdüse mit 8 Heizzonen und einer Breite von 420 mm, einem Durchsatz von ca. 40 kg/h, bei Temperaturen zwischen 240°C und 260°C. Die Schmelze-Temperatur lag zwischen 250°C und 260°C und der Schmelze-Druck, je nach Temperatur und Düseneinstellung, zwischen 50 bar und 90 bar. Weiter wurde das jeweilige Extrudat über ein 3-Walzen-Glättwerk (L-Anordnung) mit Temperaturen zwischen 70°C und 85°C und anschließend über eine Rollenbahn bestehend aus 7 temperierten Walzen mit Temperaturen von ca. 80°C geführt. Nachdem die erhaltenen Kunststoffverglasungsschichten abgekühlt waren, wurden sie gemäß den Angaben aus Tabelle 1 zugeschnitten.

**Tabelle 1**

| Ausmaße der Kunststoffverglasungsschichten (vor der Reckung) | | | |
|---|---|---|---|
| **Kunststoffverglasungsschicht** | **Höhe [mm]** | **Breite [mm]** | **Länge [mm]** |
| a1) (nicht vorgesehen für die biaxiale Reckung) | 0.5 | 150 | 150 |
| a2) (vorgesehen für die biaxiale Reckung) | 3 | 150 | 150 |
| a3) (vorgesehen für die biaxiale Reckung) | 3 | 150 | 150 |

Die hergestellten Kunststoffverglasungsschichten a2) und a3) wurden anschließend auf der Reckmaschine Karo IV von Brückner simultan biaxial gereckt. Die Reckbedingungen sind in Tabelle 2 aufgelistet. Jede gereckte Kunststoffverglasungsschicht wurde auf eine Größe von 150 mm x 150 mm geschnitten und bei 75°C (im Falle von a2)) beziehungsweise bei 80°C (im Falle von a3)) für 12h, zwischen 2 ebenen Flächen und mit genügend Gewicht beladen, geglättet.

**Tabelle 2**

| Parameter für die Reckung der Kunststoffverglasungsschichten a2) und a3) | | | | |
|---|---|---|---|---|
| Material | Ofen-Temperatur [°C] | Aufheiz-Zeit [s] | Reck-Geschwindigkeit [%/s] | Reck-Faktor [^{%}] |
| a2) | 145 | 230 | 25 | 1.75 |
| a3) | 150 | 170 | 13 | 1.75 |

### Komponente b)

Es wurde OCA von der Firma KGK aus der MGSR Serie mit der Produktbezeichnung MGCS25 verwendet. Die jeweilige eingesetzte OCA-Folie hatte eine Stärke von 0,25 mm.

Das verwendete OCA wurde entgast. Dafür wurde auf einer Seite des OCA die dort vorhandene Schutzfolie entfernt. Dann wurde das OCA zwischen 2 Glasplatten gelegt, die mit zwei Münzen auf Abstand gehalten wurden. Diese Konstruktion wurde in einen wiederverschließbaren Plastiksack platziert, um das Absetzen von Staub auf der schutzfolienfreien Seite des OCAs zu verhindern (Abbildung 1). Bei der Durchführung der Entgasung wurde der Plastiksack partiell geschlossen und der gesamte Aufbau im Trockenschrank bei 75 °C für mindestens 12 h entgast.

### Komponente c)

Bei den Glasplatten handelte es sich um Fensterglas mit einer Stärke von 2 mm und Ausmaßen von 100 mm x 200 mm.

### II. Herstellung der Verbunde

Die Kunststoffverglasungsschichten a1), a2) und a3) hatten bzw. wurden auf die folgenden Ausmaße gebracht (Tabelle 3):

**Tabelle 3**

| Ausmaße der eingesetzten Komponente a) (nach ggf. Reckung) | | | |
|---|---|---|---|
| **Material** | **Höhe [mm]** | **Breite [mm]** | **Länge [mm]** |
| a1) (keine biaxiale Reckung erfolgt) | 0.5 | 70,15 | 106,15 |
| a2) (nach biaxialer Reckung) | ≈ 1 | 70,4 | 100,3 |
| a3) (nach biaxialer Reckung) | ≈ 1 | 69,52 | 167,6 |

Die Kunststoffverglasungsschichten a1), a2) und a3) hatten die folgenden Glasübergangstemperaturen (TG):
Kunststoffverglasungsschicht a1): TG = 108°C
Kunststoffverglasungsschicht a2): TG = 108°C
Kunststoffverglasungsschicht a3): TG = 119°C

OCA - Stücke (Komponente b)) wurden auf 0,25mm x 90 mm x 120 mm zugeschnitten und mit ihrer Schutzfolien-freien Seite auf eine Kunststoffverglasungsschicht a1), a2) oder a3) laminiert. Dafür stand ein Doppelgummiwalzenlaminator zur Verfügung, der mit 2 Stellschrauben auf einen hohen Anpressdruck eingestellt wurde.

Das an der Seite überschüssige OCA wurde mit einem Handcuttermesser entfernt. Danach wurde die zweite Schutzfolie der OCA-Komponente b) entfernt. Der jeweilige Kunststoffverglasungsschicht-OCA-Verbund wurde mit seiner OCA-Seite jeweils auf eine eigene mit Ethanol gereinigte, staubfreie Glasplatte ((= Komponente c)), die eine Stärke von 2 mm und Ausmaße von 100 mm x 200 mm hatte, laminiert, so dass die Verbunde A1), A2) und A3) erhalten wurden.

Die so erhaltenen drei Verbunde A1), A2) und A3) wurden auf einer Teflonplatte in eine Klimakammer von Giant Force mit der Modellnummer: GTH-225-40-CP-AR gelegt.

### III. Delaminationstest

Die Verbunde A1), A2) und A3) wurden bei einer Starteinstellung von 85°C bei 85% Luftfeuchtigkeit in die Klimakammer eingebracht. Die Einstellung wurde über einen Zeitraum von 98 h gehalten. Danach wurde die Temperatur um 2,5 °C auf 87,5 °C erhöht. Die Luftfeuchtigkeit wurde bei 85 % beibehalten. Nach 42 h wurde die Temperatur erneut angehoben auf 89 °C bei gleichbleibender Luftfeuchtigkeit. Bei Erreichen der Gesamtlaufzeit von 236 h wurden die Verbunde aus der Klimakammer entnommen und abgekühlt.

Die Tabelle 4 fasst die Versuchsparameter zu den angegebenen Zeitpunkten des Versuchs zusammen und stellt diese den Beobachtungen zu diesem Zeitpunkt gegenüber.

**Tabelle 4**

| Auflistung der Versuchsparameter und der-laufzeit, zusammen mit den zugehörigen Beobachtungen | | |
|---|---|---|
| Aktuelle Konditionen (Temperatur \ Luftfeuchtigkeit) | Aktuelle Laufzeit | Beobachtungen |
| 85°C\85% | 0h (Start) | Teststart |
| | | Anmerkung: A2) hat ein schräg angebrachtes OCA wegen Schwierigkeiten bei der Laminierung |
| 85°C \ 87% | 2h | alle Proben sind mit Kondenswasser bedeckt |
| 85°C \ 85% | 65h | Blasen erscheinen bei allen Proben; leichte Delaminierung an der Ecke bei A1) |
| 85°C \ 85% | 68h | immer noch viele Blasen bei allen |
| 84.98°C \ 85.09% | 72h | keine neuen Entwicklungen |
| 81.78°C \ 85.72% | 89.5h | keine neuen Entwicklungen |
| 85.01°C \ 84.96% | 97.75h | Temperaturerhöhung auf 87.5°C |
| 87.5°C \ 85.01% | 113h | starkes Ablösen der Ecke und der Seite bei A1) |
| 87.49°C \ 85.00% | 121.75 | keine neuen Entwicklungen |
| 87.48°C \ 85.11% | 138h | weiteres Ablösen bei A1), erstes Schrumpfen bei A2) sichtbar |
| 89.01°C \ 84.69% | 143h | Temperaturerhöhung auf 89°C, verstärktes Schrumpfen bei A2) |
| 89.01 °C \ 84.32% | 159h | Blasen sind immer noch da, Schrumpfen bei A2) setzt sich fort |
| 89.0°C \ 84.00% | 166.75h | keine weiteren Veränderungen, abgesehen von weiterem Schrumpfen bei A2) |
| 89.0°C \ 84.9% | 231.75h | große Verkleinerung bei A2) und starkes Abheben bei A1) |

### IV. Ergebnisse

Insgesamt kann festgestellt werden, dass in allen drei Fällen Blasen während des Experiments erschienen sind. Die Kunststoffverglasungsschicht aus a2) des Verbundes A2) schrumpft sehr stark, hingegen hat die Kunststoffverglasungsschicht aus a3) des Verbundes A3) keine Anzeichen dafür. Die Kunststoffverglasungsschicht aus a1) des Verbundes A1) hebt sich stark von der Glasplatte c) ab und delaminiert an einigen Stellen.

Weiterhin wurden die Kunststoffverglasungsschichten der Verbunde A1), A2) und A3) vor und nach dem Delaminationstest gemessen, einmal in Y-Richtung (Extrusionsrichtung) und einmal in X-Richtung (90° zur Extrusionsrichtung). Als Ergebnis erhält man jeweils eine Differenz die absolut und in Prozent in Tabelle 4 angegeben ist. Es ist klar zu erkennen, dass die Kunststoffverglasungsschicht a2) sehr stark geschrumpft ist. Dies ist erklärbar durch vorausgehende Experimente in denen festgestellt wurde, dass bei Überschreiten der Temperatur von 85°C bei einer Luftfeuchtigkeit von 85% die Anlasstemperatur für ein komplettes Schrumpfen dieses Materials erreicht ist. Aufgrund der durch biaxiale Reckung eingebrachten Spannungen in die Kunststoffverglasungsschicht a2) erfolgt anscheinend dort eine Reformierung der Struktur zu der Ausgangsstruktur vor dem Recken. Dies erfolgt überraschenderweise nicht bei der ebenfalls biaxial gereckten Kunststoffverglasungsschicht a3). Die Schrumpfwerte für die Kunststoffverglasungsschicht a3) sind nahezu vergleichbar mit denen der Kunststoffverglasungsschicht a1).

**Tabelle 5**

| Absolute und prozentuale Änderungen der Dimensionen der Kunststoffverglasungsschicht nach 236h Experimentlaufzeit | | |
|---|---|---|
| **Material (Maße vor Delaminationstest)** | **Δb/ Δy** | **Δx/ Δy** |
| | **[mm]** | **[%]** |
| a1) (70,15 mm x 106,15 mm) | -0,47 / -0.69 | -0.67 / -0.65 |
| a2) (70,4 mm x 100,3 mm) | -8.8 / -10.28 | -12.5 / -10.25 |
| a3) (69,52 mm x 167,6 mm) | -0.73 / -0.62 | -1.05 / -0.37 |

## Patentansprüche

1. Verbund, vorzugsweise ein Laminat-Verbund, umfassend:
- eine Kunststoffverglasungsschicht aus einem in der Schichtebene biaxial gereckten Kunststoff, wobei der Kunststoff zu mindestens 80 Gew.-%, vorzugsweise zu mindestens 90 Gew.-%, jeweils bezogen auf das Gesamtgewicht des Kunststoffes, Polymethylmethacrylat ist mit einem syndiotaktischen Triadenanteil von mindestens 60 %, vorzugsweise mit einem syndiotaktischen Triadenanteil von mindestens 62 %, jeweils bezogen auf den Gesamt-Triadenanteil des Polymethylmethacrylats, und wobei die Kunststoffverglasungsschicht eine Glasübergangstemperatur (TG) von mindestens 116°C, vorzugsweise mindestens 117°C, bevorzugt mindestens 119°C, aufweist,
- eine Klebeschicht, vorzugsweise ein optical clear adhesive (OCA) oder ein pressure sensitive adhesive (PSA), und
- eine Schicht aus anorganischem Glas.

2. Verbund gemäß Anspruch 1, **dadurch gekennzeichnet, dass** das Polymethylmethacrylat durch Polymerisation einer Mischung, enthaltend mindestens 90 Gew.-% Methylmethacrylat (MMA) und 0 bis zu insgesamt 10 Gew.-%, jeweils bezogen auf das Gesamtgewicht der Mischung, eines oder mehrere weiterer Comonomere, bei denen es sich nicht um MMA handelt, vorzugsweise Alykl(meth)acrylate, erhalten wird.

3. Verbund gemäß Anspruch 1 oder 2, **dadurch gekennzeichnet, dass** der Kunststoff der Kunststoffverglasungsschicht als Blend vorliegt und bis zu 20 Gew.-%, vorzugsweise bis zu 10 Gew.-%, jeweils bezogen auf das Gesamtgewicht des Kunststoffes, einer oder mehrerer Substanzen ausgewählt aus der Gruppe bestehend aus (Co)polymeren, Farbstoffen, insbesondere Pigmenten, Trennmitteln, Antistatika, Antioxidantien, Entformungsmitteln, Flammschutzmitteln, Schmiermitteln, Fließverbesserungsmitteln, Füllstoffen, Lichtstabilisatoren, UV-Stabilisatoren und/oder-Absorbern, Verwitterungsschutzmitteln, Weichmachern und/oder weiteren Additiven, enthält.

4. Verbund gemäß Anspruch 3, **dadurch gekennzeichnet, dass** als weiteres (Co)polymer Styrol-Acrylnitril-Copolymer (SAN) im Kunststoff der Kunststoffverglasungsschicht enthalten ist.

5. Verbund gemäß mindestens einem der Ansprüche 1 bis 4, **dadurch gekennzeichnet, dass** die Kunststoffverglasungsschicht aus dem in der Schichtebene biaxial gereckten Kunststoff eine Dicke von 0,1 bis 1,5 mm aufweist.

6. Verbund gemäß mindestens einem der Ansprüche 1 bis 5, **dadurch gekennzeichnet, dass** die Kunststoffverglasungsschicht ein- oder beidseitig eine Kratzfestbeschichtung aufweist, wobei bei beidseitiger Kratzfestbeschichtung die beiden Kratzfestbeschichtungen gleich oder verschieden sein können.

7. Verbund gemäß mindestens einem der Ansprüche 1 bis 6, **dadurch gekennzeichnet, dass** der Verbund mindestens auf einer seiner äußeren Oberflächen eine Kratzfestbeschichtung aufweist.

8. Verbund gemäß mindestens einem der Ansprüche 1 bis 7, **dadurch gekennzeichnet, dass** die Kunststoffverglasungsschicht aus dem in der Schichtebene biaxial gereckten Kunststoff mittels Extrusion und anschließender zweifacher Reckung, vorzugsweise zweifacher Inline-Reckung, in Extrusionsrichtung und senkrecht dazu, sequentiell oder simultan hergestellt wurde.

9. Verbund gemäß mindestens einem der Ansprüche 1 bis 8, **dadurch gekennzeichnet, dass** die Reckungen, vorzugsweise die Inline-Reckungen, in beide Richtungen jeweils mit einem Reckfaktor zwischen 1,5 und 4,0, vorzugsweise zwischen 1,75 und 3,5, bevorzugt zwischen 2,0 und 3,0, erfolgt.

10. Verbund gemäß mindestens einem der Ansprüche 1 bis 9, **dadurch gekennzeichnet, dass** die Kunststoffverglasungsschicht nach der Extrusion vernetzt ist oder durch Nachbehandlung nach der Extrusion und vor der Reckung vernetzt wird.

11. Display, **dadurch gekennzeichnet, dass** dieses Display einen Verbund gemäß mindestens einem der Ansprüche 1 bis 10 enthält oder aus ihm besteht und/oder dass dieses Display unter Verwendung eines dieser Verbunde hergestellt wurde, wobei das Display ein LCD-, OLED- oder elektrophoretisches Display ist.

12. Verfahren zur Herstellung von einem Verbund gemäß mindestens einem der Ansprüche 1 bis 10 **dadurch gekennzeichnet, dass** das Verfahren einen Schritt zur Herstellung der Kunststoffverglasungsschicht enthält, wobei es sich um ein Extrusionsverfahren mit anschließender Glättung und biaxialer Reckung handelt, und dass die für diesen Schritt verwendete Anlage mindestens die folgenden Komponenten enthält:
einen Extruder,
eine optionale Schmelzepumpe,
eine optionale Schmelzefiltration,
ein optionales statisches Mischelement,
eine Plattendüse,
ein Glättwerk,
eine Vorrichtung zur Reckung der Platte in Extrusionsrichtung und
senkrecht zur Extrusionsrichtung und der dazugehörigen Temperierungseinheit
und optional einen Wickler,
und
wobei die Kunststoffverglasungsschicht über eine Klebeschicht, vorzugsweise ein optical clear adhesive (OCA) oder ein pressure sensitive adhesive (PSA), mit einer Schicht aus anorganischem Glas direkt oder über mindestens eine weitere Schicht verbunden wird, vorzugsweise laminiert wird.
